(19) Europäisches Patentamt
European Patent Office
Office européen des brevets

(11) EP 4 692 158 A1

(12) **EUROPEAN PATENT APPLICATION**
published in accordance with Art. 153(4) EPC

(43) Date of publication:
**11.02.2026 Bulletin 2026/07**

(21) Application number: **24780436.2**

(22) Date of filing: **27.03.2024**

(51) International Patent Classification (IPC):
***C08G 59/50*** *(2006.01)* ***C08G 59/22*** *(2006.01)*
***C08G 59/30*** *(2006.01)* ***C08J 5/24*** *(2006.01)*
***C08K 5/17*** *(2006.01)* ***C08K 7/02*** *(2006.01)*
***C08L 63/00*** *(2006.01)*

(52) Cooperative Patent Classification (CPC):
**C08G 59/22; C08G 59/30; C08G 59/50; C08J 5/24; C08K 5/17; C08K 7/02; C08L 63/00**

(86) International application number:
**PCT/JP2024/012229**

(87) International publication number:
**WO 2024/204330 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023 JP 2023050847**

(71) Applicant: **Toray Industries, Inc.**
**Tokyo 103-8666 (JP)**

(72) Inventors:
- **MIYOSHI, Masayuki**
  **Iyo-gun, Ehime 791-3193 (JP)**
- **SAKATA, Hiroaki**
  **Iyo-gun, Ehime 791-3193 (JP)**

(74) Representative: **Mewburn Ellis LLP**
**Aurora Building**
**Counterslip**
**Bristol BS1 6BX (GB)**

(54) **EPOXY RESIN COMPOSITION, PREPREG, AND FIBER-REINFORCED COMPOSITE MATERIAL**

(57) The main object of the present invention is to provide an epoxy resin composition that has sufficiently high heat resistance while maintaining a high recyclability.

An epoxy resin composition comprising components [A], [B], and [C] as specified below wherein the epoxy resin of the component [B] accounts for 10 to 30 parts by mass relative to the total amount of all epoxy resin components, which accounts for 100 parts by mass.

[A]: a difunctional epoxy resin that is liquid at 23°C;

[B]: an epoxy resin either having an average epoxy equivalent weight of 400 to 1,200 and a structure as represented by the formula (I) or having an average epoxy equivalent weight of 150 to 500 and a structure as represented by the formula (II).

[chemical compound 1]

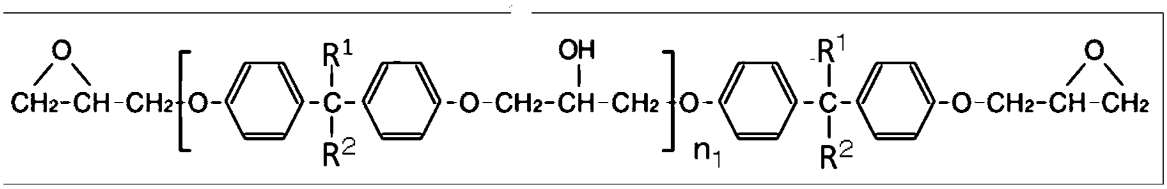

・・・(I)

(In the formula (I), $R^1$ and $R^2$ each represent a hydrogen atom or an alkyl group having a carbon number of 1 to 10; $R^1$ and

EP 4 692 158 A1

$R^2$ may be either identical to or different from each other; and $n_1$ is an integer of 1 to 30.)

[chemical compound 2]

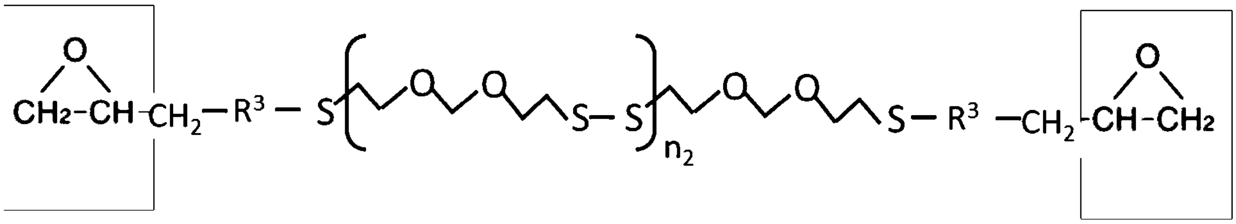

・・・(II)

(In the formula (II), $R^3$ represents a bisphenol structure, and $n_2$ is an integer of 1 to 30.)
[C]: an aromatic diamine having a structure as represented by the formula (III).

[chemical compound 3]

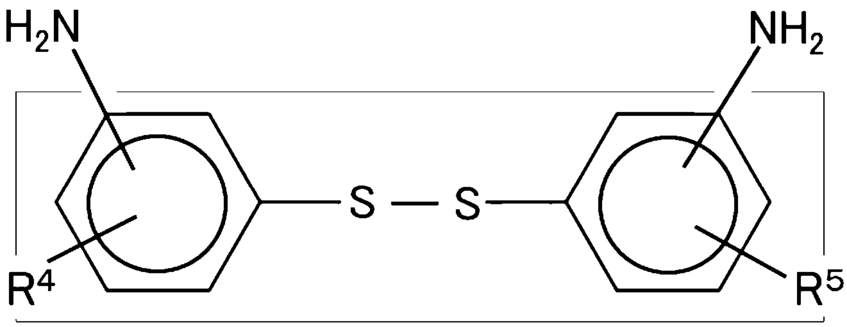

・・・(III)

(In the formula (III), $R^4$ and $R^5$ each represent a hydrogen atom, a halogen atom, or an alkyl group having a carbon number of 1 to 8, and $R^4$ and $R^5$ may be either identical to or different from each other.)

## Description

### TECHNICAL FIELD

The present invention relates to an epoxy resin composition having high recyclability and also relates to a prepreg and a fiber-reinforced composite material that includes it as matrix resin.

### BACKGROUND ART

Being high in strength, stiffness, heat resistance, and adhesiveness, epoxy resin has been suitably used as matrix resin for fiber-reinforced composite materials that are formed by combining epoxy resin with reinforcing fiber such as carbon fiber, glass fiber, and aramid fiber.

Sheet-like molding materials for fiber-reinforced composite materials (prepregs) produced by impregnating reinforcing fibers with epoxy resin are often used in producing fiber-reinforced composite materials. Molded articles can be produced by a technique designed to lay-up prepreg layers and then heating them to cure the epoxy resin, and various properties can be developed based on different prepreg lay-up designs. Accordingly, prepregs are now applied in various fields including aircraft, automotive, sporting, and medical sectors.

In recent years, the applications of fiber-reinforced composite materials have rapidly expanded, and there is an increasing demand for epoxy resin compositions and fiber-reinforced composite materials that have, in addition to high heat resistance and stiffness, high recyclability to support carbon neutrality. It is known that epoxy resin compositions containing 4,4'-diaminodiphenyl disulfide as a curing agent can work effectively to provide a matrix resin for these thermomechanically reprocessable fiber-reinforced composite materials (Patent document 1).

### PRIOR ART DOCUMENTS

### PATENT DOCUMENTS

Patent document 1: International Publication WO 2015/181054

### SUMMARY OF INVENTION

### PROBLEMS TO BE SOLVED BY THE INVENTION

The epoxy resin composition proposed in Patent document 1 is low in recyclability because the cured product of the epoxy resin composition cannot be depolymerized with an organic solvent once the fiber-reinforced composite material is cured, making it impossible to recover the reinforcing fibers from the fiber-reinforced composite material.

To improve heat resistance, it is necessary to increase the cross-linking density. However, an increased cross-linking density leads to a more complex network and the resin becomes more resistant to decomposition, making it impossible to depolymerize it by chemical treatment. In view of this, the main object of the present invention is to relieve the trade-off between depolymerizability and heat resistance that has been a major problem in the conventional technology and to provide an epoxy resin composition that ensures sufficiently high heat resistance while maintaining high recyclability. In addition, the present invention also aims to provide a prepreg and a fiber-reinforced composite material with high recyclability, which are formed by applying such an epoxy resin composition as a matrix resin.

### MEANS OF SOLVING THE PROBLEMS

The epoxy resin composition according to the present invention adopts the following constitution.

1. An epoxy resin composition including components [A], [B], and [C] as specified below wherein the epoxy resin of the component [B] accounts for 10 to 30 parts by mass relative to the total amount of all epoxy resin components, which accounts for 100 parts by mass:

   [A]: a difunctional epoxy resin that is liquid at 23°C,
   [B]: an epoxy resin either having an average epoxy equivalent weight of 400 to 1,200 and a structure as represented by the formula (I) described later or having an average epoxy equivalent weight of 150 to 500 and a structure as represented by the formula (II), and
   [C]: an aromatic diamine having a structure as represented by the formula (III) described later.

2. An epoxy resin composition as set forth in the paragraph 1, wherein the component [A] is a bisphenol type epoxy resin having an average epoxy equivalent weight of 160 to 200.
3. An epoxy resin composition as set forth in either the paragraph 1 or 2, wherein the component [B] has a structure as represented by the formula (I), is a bisphenol F type epoxy resin, and has an average epoxy equivalent weight of 800 to 1,200.
4. An epoxy resin composition as set forth in any one of the paragraphs 1 to 3, wherein the component [C] is an aromatic diamine having a structure as represented by the formula (IV) described below, or an aromatic diamine having a structure as represented by the formula (IV) and a structural isomer thereof.
5. An epoxy resin composition as set forth in any one of the paragraphs 1 to 4, forming a cured product with a glass transition temperature of 110°C or more when cured at 150°C to 220°C for 120 minutes.
6. An epoxy resin composition as set forth in any one of the paragraphs 1 to 5, further comprising, as a component [D], a trifunctional or tetrafunctional epoxy resin in an amount of 5 to 30 parts by mass relative to the total amount of all epoxy resin components, which accounts for 100 parts by mass.
7. An epoxy resin composition as set forth in any one of the paragraphs 1 to 6, further comprising, as a component [E], a difunctional naphthalene type epoxy resin.

Furthermore, the prepreg according to the present invention includes an epoxy resin composition as described above and reinforcing fibers. In addition, the fiber-reinforced composite material according to the present invention is produced by curing a prepreg as described above.

ADVANTAGEOUS EFFECTS OF THE INVENTION

The present invention serves to provide an epoxy resin composition that has sufficiently high heat resistance while maintaining high recyclability.

DESCRIPTION OF PREFERRED EMBODIMENTS

The epoxy resin composition according to the present invention contains the following components [A], [B], and [C] in a specific ratio to be described later:

component [A]: a difunctional epoxy resin that is liquid at 23°C,
component [B]: an epoxy resin either having an average epoxy equivalent weight of 400 to 1,200 and a structure as represented by the formula (I) described later or having an average epoxy equivalent weight of 150 to 500 and a structure as represented by the formula (II), and
component [C]: an aromatic diamine having a structure as represented by the formula (III).

Each constituent will be described below.

(Component [A])

The component [A] used for the present invention is a difunctional epoxy resin that is liquid at 23°C. Here, an n-functional epoxy refers to a substance in which the main component (stereoisomers and structural isomers such as 2,2'- or 2,4'-substituted structures that differ only in substitution positions of epoxy groups on benzene or naphthalene rings are regarded as identical) has n epoxy groups in its molecule, and accordingly, a difunctional epoxy resin refers to an epoxy resin that has two epoxy groups in its molecule. "Liquid" means having a viscosity of 25,000 mPa·s or less at 23°C. Being in a liquid form, it can form, when meltblended with the component [B] and kneaded with the component [C], a resin composition with so-called latent curing property that does not undergo a (curing) reaction in the range of 23°C to 80°C but undergoes a (curing) reaction above 80°C. It is preferable for the component [A] to have a viscosity of 15,000 mPa·s or less, more preferably 7,000 mPa·s or less, at 23°C. If it has a viscosity of 15,000 mPa·s or less, the resin composition can work to impregnate reinforcing fibers to form a sheet-like prepreg whereas if it has a viscosity of 7,000 mPa·s or less, a fiber-reinforced composite material can be produced by molding with the filament winding method or the resin transfer molding method. It is preferable for the component [A] to account for 5 to 80 parts by mass, more preferably 50 to 70 parts by mass, relative to the total amount of all epoxy resins, which accounts for 100 parts by mass. If the component [A] accounts for 50 to 70 parts by mass relative to the total amount of all epoxy resins, which accounts for 100 parts by mass, it serves to prepare an epoxy resin composition that can form a cured product having a good balance between depolymerizability and heat resistance. (Hereinafter, the depolymerizability of a cured product will be referred to simply as depolymerizability.) Examples of suitable epoxy resins for use as the component [A] include bisphenol type epoxy resins such as bisphenol A type epoxy resins, bisphenol F type epoxy resins, and bisphenol S type epoxy resins, and others such

as biphenyl type epoxy resins, naphthalene type epoxy resins, fluorene skeleton-containing epoxy resins, polypropylene glycol type epoxy resins, polyethylene glycol type epoxy resins, and long-chain aliphatic epoxy resins, which should meet the above definition of "liquid".

It is preferable that the component [A] used for the present invention be a bisphenol type epoxy resin, particularly one having an average epoxy equivalent weight of 160 to 200. If its average epoxy equivalent weight is in the range of 160 to 200, it enables the preparation of a highly heat resistant epoxy resin composition that forms a cured product having a glass transition temperature of 110°C or more. In addition, it is favorable also because of having high compatibility with the component [B].

For the present invention, evaluations in terms of average epoxy equivalent weight can be made based on potentiometric titration performed in accordance with JIS K7236 (2001). For example, about 300 mg of a epoxy resin sample is weighed in a glass beaker, and 10 mL of chloroform is added. They are stirred with a magnetic stirrer until the weighed resin is completely dissolved in chloroform. Then, 20 mL of acetic acid is added to the solution prepared above, and 10 mL of an acetic acid solution of tetraethylammonium bromide (0.4 g/mL in acetic acid) is further added, followed by stirring. Electrodes are immersed in the solution, and potentiometric titration is performed with a perchloric acid-acetic acid standard solution (0.1 mol/L), followed by calculating the average epoxy equivalent weight.

(Component [B])

The component [B] used for the present invention has a structure as represented by the formula (I) or the formula (II). An epoxy resin having a structure as represented by the formula (I) has an average epoxy equivalent weight of 400 to 1,200, whereas an epoxy resin having a structure as represented by the formula (II) has an average epoxy equivalent weight of 150 to 500.

[chemical compound 1]

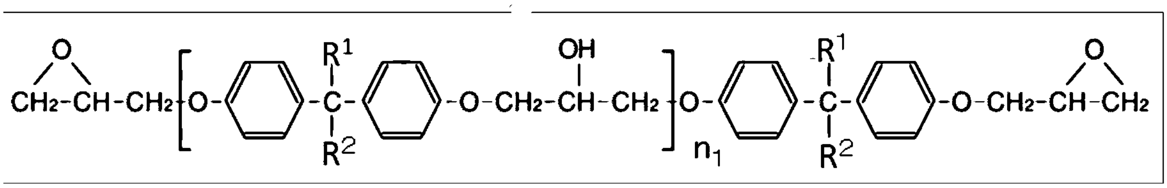

・・・(I)

(In the formula (I), $R^1$ and $R^2$ each represent a hydrogen atom or an alkyl group having a carbon number of 1 to 10, and $R^1$ and $R^2$ may be either identical to or different from each other. Furthermore, $n_1$ is an integer of 1 to 30.)

[chemical compound 2]

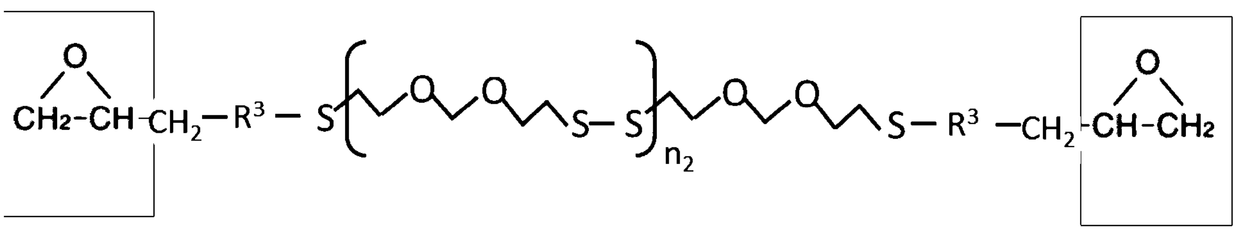

・・・(II)

(In the formula (II), $R^3$ represents a bisphenol structure, and $n_2$ is an integer of 1 to 30.) Hereinafter, in the present Description, the expression "an epoxy resin having a structure as represented by the formula (I)", for example, may be referred to simply as "an epoxy resin of the formula (I)".

The epoxy resin of the formula (I) has an average epoxy equivalent weight of 400 to 1,200. If the epoxy resin of the formula (I) has an average epoxy equivalent weight of 400 to 1,200, it serves to form an epoxy resin composition that has a good balance between depolymerizability and heat resistance.

The fact that $R^1$ and $R^2$ in the epoxy resin of the formula (I) each represent a hydrogen atom or an alkyl group having a carbon number of 1 to 10 serves to form an epoxy resin composition having high heat resistance. The epoxy resin

of the formula (I) is difunctional and has a long-chain structure and accordingly, it exhibits a high depolymerizability because it is decomposed in large domain units when the disulfide bond in the formula (III), which will be described later, is cleaved. In addition, $n_1$ in the formula (I) is an integer of 1 to 30, and this serves to form an epoxy resin composition that has a good balance between depolymerizability and heat resistance.

In the case where the component [B] according to the present invention has a structure of the formula (I), that component is preferably a bisphenol F type epoxy resin that has an average epoxy equivalent weight of 800 to 1,200. The use of a bisphenol F type epoxy resin having an average epoxy equivalent weight of 800 to 1,200 serves to form an epoxy resin composition that has even better depolymerizability and heat resistance. In addition, it is preferable because the depolymerization of its cured product can provide a plasticized resin composition having a lower viscosity, thereby ensuring a high remoldability.

The epoxy resin of the formula (II) has an average epoxy equivalent weight of 150 to 500. As the epoxy resin of the formula (I) has an average epoxy equivalent weight of 150 to 500, it serves to form an epoxy resin composition that has a good balance between depolymerizability and heat resistance. It is preferable that the epoxy resin of the formula (II) have an average epoxy equivalent weight of 200 to 350. If the epoxy resin of the formula (II) has an average epoxy equivalent weight of 200 to 350, it serves to form an epoxy resin composition that has a good balance between depolymerizability and heat resistance. Here, it is preferable that the epoxy resin of the formula (II) have a molecular weight of 450 or more.

The fact that $R^3$ in the epoxy resin of the formula (II) has a bisphenol structure serves to form an epoxy resin composition having high heat resistance. A bisphenol structure means a compound having two hydroxyphenyl groups, and examples thereof include bisphenol A type, bisphenol E type, bisphenol F type, and bisphenol S type ones. In particular, the use of a bisphenol A type one or a bisphenol F type one is preferable because the resulting epoxy resin of the formula (II) has a lower viscosity.

In addition, as $n_2$ in the epoxy resin of the formula (II) is an integer of 1 to 30, it serves to form an epoxy resin composition that has a good balance between depolymerizability and heat resistance.

The epoxy resin of the formula (II) contains a disulfide bond, and cleavage of the disulfide bond can be caused by adding a dissolution liquid or performing hydrolysis treatment even after the curing of the epoxy resin composition, thereby facilitating its depolymerization. Furthermore, as in the case of the epoxy resin of the formula (I), the epoxy resin of the formula (II) is also difunctional and has a long-chain structure and the resin itself has a disulfide bond. Accordingly, decomposition in large domain units can be caused not only by the cleavage of the disulfide bond in the formula (III) but also by the cleavage of the disulfide bond in the resin itself, thereby leading to a further enhanced depolymerizability.

The epoxy resin of the component [B] used for the present invention accounts for 10 to 30 parts by mass relative to the total amount of all epoxy resins, which accounts for 100 parts by mass. This means that in the case where an epoxy resin of the formula (I) is adopted as the component [B], the epoxy resin of the formula (I) accounts for 10 to 30 parts by mass relative to the total amount of all epoxy resins, which accounts for 100 parts by mass, whereas in the case where an epoxy resin of the formula (II) is adopted as the component [B], the epoxy resin of the formula (II) accounts for 10 to 30 parts by mass relative to the total amount of all epoxy resins, which accounts for 100 parts by mass. In the case where an epoxy resin of the formula (I) and an epoxy resin of the formula (II) are used in combination, it is preferable that the two epoxy resins altogether account for 10 to 30 parts by mass relative to the total amount of all epoxy resins, which accounts for 100 parts by mass. If the epoxy resin of the component [B] accounts for an appropriate proportion as described above, it serves to form an epoxy resin composition that has a good balance between depolymerizability and heat resistance.

Commercial products of the epoxy resin of the formula (I) for use as the component [B] include, for example, bisphenol A type epoxy resins such as jER (registered trademark) 1001, jER (registered trademark) 1004, jER (registered trademark) 1007 (all manufactured by Mitsubishi Chemical Corporation), EPICLON (registered trademark) 1050, EPICLON (registered trademark) 3050, and EPICLON (registered trademark) 4050 (all manufactured by DIC Corporation). Examples of bisphenol F type epoxy resins include jER (registered trademark) 4004P, jER (registered trademark) 4005P (both manufactured by Mitsubishi Chemical Corporation), YDF-2001, and YDF-2004 (both manufactured by KOKDO Chemical Co., Ltd.).

Commercial products of the epoxy resin of the formula (II) for use as the component [B] include, for example, FLEP (registered trademark) 50 and FLEP (registered trademark) 60 (both manufactured by Toray Fine Chemicals Co., Ltd.).

The epoxy resin composition according to the present invention may further contain, as the component [D], a trifunctional or tetrafunctional epoxy resin, and it preferably accounts for 5 to 30 parts by mass, more preferably 5 to 20 parts by mass, relative to the total amount of all epoxy resins, which accounts for 100 parts by mass.

Normally, the addition of a trifunctional or tetrafunctional epoxy resin acts to increase the cross-linking density, leading to an increased heat resistance but a decreased depolymerizability. However, if the component [D] contained accounts for 5 to 30 parts by mass relative to the total amount of all epoxy resins, which accounts for 100 parts by mass, it serves to produce an epoxy resin composition that has a good balance between depolymerizability and heat resistance. Furthermore, if the component [D] contained accounts for 5 to 20 parts by mass relative to the total amount of all epoxy resins, which accounts for 100 parts by mass, it serves to produce an epoxy resin composition that has an even better

balance between depolymerizability and heat resistance.

Examples of trifunctional or tetrafunctional epoxy resins for use as the component [D] include naphthalene type epoxy resins, epoxy resins having fluorene skeletons, tetraglycidyl diaminodiphenylmethane, tetraglycidylxylene diamine, triglycidyl aminophenol, triglycidyl aminocresol, and other similar glycidylamine type epoxy resins. These may be used singly or as a combination of a plurality thereof. In particular, the use of N,N,N',N'-tetraglycidyl diaminodiphenylmethane, triglycidyl aminophenol, or triglycidyl aminocresol is preferable because it serves to produce an epoxy resin composition that is liquid at 23°C and high in heat resistance.

The epoxy resin composition according to the present invention may further contain, as a component [E], a difunctional naphthalene type epoxy resin, and in particular, it is preferable to use one that has an average epoxy equivalent weight of 110 to 280, more preferably an average epoxy equivalent weight of 150 to 280. If its average epoxy equivalent weight is in the range of 110 to 280, it enables the production of a highly heat resistant epoxy resin composition that can form a cured product having a glass transition temperature of 110°C or more, and if its average epoxy equivalent weight is in the range of 150 to 280, it enables the production of a highly heat resistant epoxy resin composition that can form a cured product having a glass transition temperature of 130°C or more. In addition, it is favorable also because of having high compatibility with the component [A].

It is preferable for the component [E] to account for 5 to 80 parts by mass, more preferably 50 to 70 parts by mass, relative to the total amount of all epoxy resins, which accounts for 100 parts by mass. If the component [E] accounts for 50 to 70 parts by mass relative to the total amount of all epoxy resins, which accounts for 100 parts by mass, it serves to ensure increased heat resistance while maintaining sufficient depolymerizability. In addition, it is liquid even when formed a homogeneous mixture with the component [A] and it exhibits excellent processability in producing a prepreg.

If the component [E] is contained, naphthalene has a rigid structure and the cross-linking density is low because it is a difunctional epoxy resin. Therefore, it serves to produce an epoxy resin composition that has further increased heat resistance while maintaining sufficient depolymerizability.

Commercial products of such a difunctional naphthalene type epoxy resin for use as the compound [E] include, for example, EPICLON (registered trademark) HP-4032SS, EPICLON (registered trademark) HP-4032D, EPICLON (registered trademark) HP-4770 (all manufactured by DIC Corporation), and diglycidylized products of 1,4'-dihydroxynaphthalene (manufactured by Air Water Performance Chemical Inc.).

In particular, the use of EPICLON (registered trademark) HP-4770 is preferable because it enables the production of a highly heat resistant epoxy resin composition that can form a cured product having a glass transition temperature of 130°C or more.

(Component [C])

The component [C] used for the present invention is an aromatic diamine having a structure of the formula (III).

[chemical compound 3]

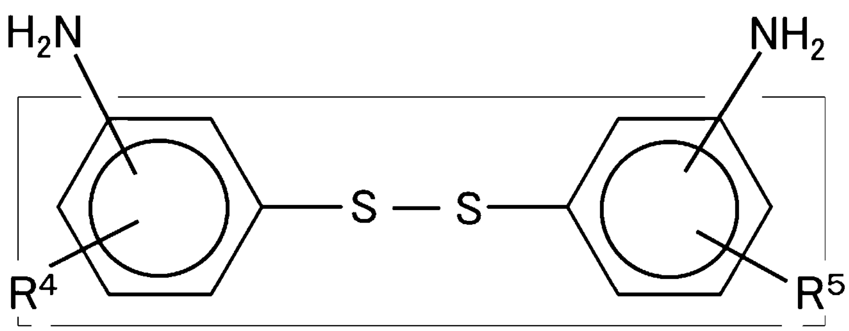

• • • (III)

(In the formula (III), $R^4$ and $R^5$ each represent a hydrogen atom, a halogen atom, or an alkyl group having a carbon number of 1 to 8, and $R^4$ and $R^5$ may be either identical to or different from each other.)

If $R^4$ and $R^5$ in the aromatic diamine of the formula (III) each represent a hydrogen atom, a halogen atom, or an alkyl group having a carbon number of 1 to 8, it serves to form an epoxy resin composition that has a good balance between depolymerizability and heat resistance. If the aromatic diamine of the formula (III) contains a disulfide bond in its structure, cleavage of the disulfide bond can be caused by adding a dissolution liquid or performing hydrolysis treatment even after the curing of the epoxy resin composition, thereby allowing the cured product to undergo depolymerization.

Commercial products of the aromatic diamine of the formula (III) include, for example, 4,4'-diaminodiphenyl disulfide and 2,2'-diaminodiphenyl disulfide (both manufactured by Tokyo Chemical Industry Co., Ltd.).

Among the various aromatic diamines that are represented by the formula (III), the component [C] according to the present invention is preferably an aromatic diamine having a structure as represented by the formula (IV) or an aromatic diamine having a structure as represented by the formula (IV) and a structural isomer thereof.

[chemical compound 4]

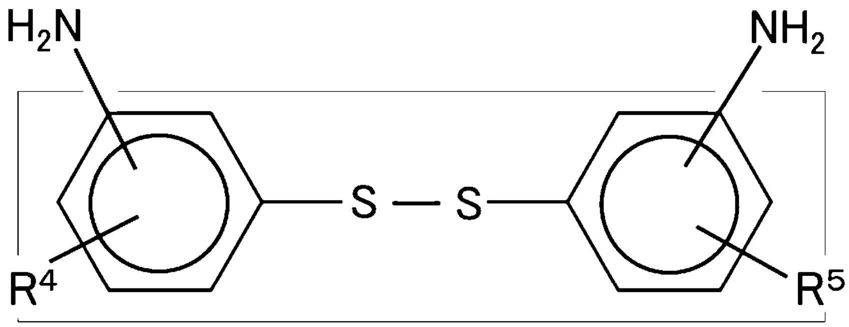

・・・(III)

(In the formula (IV), $R^4$ and $R^5$ each represent a hydrogen atom, a halogen atom, or an alkyl group having a carbon number of 1 to 8, and $R^4$ and $R^5$ may be either identical to or different from each other.)

In the structure of the formula (IV), amino groups are located at the 2,2'-positions to cause steric hindrance and lead to a low cross-linking density, and this enables the production of an epoxy resin composition that has an even better balance between depolymerizability and heat resistance. Furthermore, the use of a mixture of an aromatic diamine having a structure as represented by the formula (IV) and a structural isomer thereof is preferable because this allows the melting point to lower through eutectic formation, thus providing an epoxy resin composition having a reduced viscosity.

It is preferable that, when cured at 150°C to 220°C for 120 minutes, the epoxy resin composition according to the present invention form a cured product having a glass transition temperature of 110°C or more, more preferably 130°C or more, and still more preferably 150°C or more. The glass transition temperature can be measured according to JIS K7121 (1999) using a differential scanning calorimeter. It should be noted that a cured product resulting from "curing at 150°C to 220°C for 120 minutes" mentioned above means one produced by curing a resin by maintaining it at an appropriate temperature in the range of 150°C to 220°C for 120 minutes or more.

Specifically, a cured resin formed under the above conditions is heated from 25°C to 300°C at a temperature ramp rate of 10°C/min, held at 300°C for 3 minutes, and then rapidly cooled to 25°C at a cooling rate of 30°C/min. In the chart (longitudinal axis representing heat energy and horizontal axis representing temperature) showing the heating step from 25°C to 300°C observed by differential scanning calorimetry, the steplike changing portion of the resulting glass transition curve is examined and the glass transition temperature is defined as the temperature at the point where the straight line that is located at the same distance in the vertical direction from the extension of each baseline intersects the curve that runs in a steplike way in the course of glass transition.

In general, the glass transition temperature and depolymerizability are correlated with each other and accordingly, a higher glass transition temperature ensures a higher durability and a longer service life of the material. If the cured product formed under the above conditions has a glass transition temperature of 110°C or more, the resin can be useful, for example, for secondary structural components such as interior members used in the field of aerospace industry and for high heat-resistant components such as bicycle parts, wind turbine blades, ship parts, railway vehicle components, and notebook computer housings used in the field of general industrial applications. If the cured product has a glass transition temperature of 130°C or more, the resin can be useful also for structural parts of automobiles used in the field of general industrial applications. Furthermore, if the cured product has a glass transition temperature of 150°C or more, the resin can be useful for primary structures of aircraft such as main wings, tail wings, and floor beams used in the aerospace industry. On the other hand, it is preferable for the cured product formed under the above conditions to have a glass transition temperature of 250°C or less. If the glass transition temperature is 250°C or less, it allows the cured product to have a cross-linking density in a suitable range to enable depolymerization.

As described above, the combined use of the components [A] to [C] serves to relieve the trade-off between heat resistance and enhanced depolymerizability and ensure a high heat resistance. Accordingly, such a combination is preferable because it serves to maintain sensitivity to depolymerization treatment while holding sufficient durability for practical use environments, thereby ensuring high recyclability.

Unless adversely affecting the advantageous effects of the present invention, the epoxy resin composition according to the present invention may also contain thermoplastic resins, rubber particles, inorganic particles such as silica, or nanoparticles such as CNT and graphene for the purpose of, for example, controlling the viscoelasticity, producing a prepreg with improved tackiness and drape properties, and providing a resin composition with improved mechanical

properties and toughness. Examples of thermoplastic resins that are soluble in epoxy resins include polyvinyl acetal resins such as polyvinyl formal and polyvinyl butyral, and others such as polyvinyl alcohol, phenoxy resins, polyamides, polyimides, polyvinyl pyrrolidone, polysulfones, and polyethersulfones. Examples of such rubber particles include crosslinked rubber particles and core-shell rubber particles that have dissimilar polymers graftpolymerized on the surface of crosslinked rubber particles.

To prepare the epoxy resin composition according to the present invention, kneading may be performed using a machine such as kneader, planetary mixer, three roll mill, and twin screw extruder, but manual mixing using a beaker, spatula, etc. may be adopted if uniform kneading is possible.

The prepreg according to the present invention includes the aforementioned epoxy resin composition and at least one selected from the group consisting of carbon fiber, glass fiber, and aramid fiber to serve as reinforcing fiber. Reinforcing fibers may have treated surfaces. Useful surface treatment methods include deposition of metal as conductive material, treatment with a coupling agent, treatment with a sizing agent, treatment with a binding agent, and adhesion of an additive. Furthermore, these different types of reinforcing fibers may be used singly or may be used as a combination of two or more thereof. From the viewpoint of weight reduction, in particular, carbon fibers such as polyacrylonitrile (PAN) based, pitch based, and rayon based ones have been adopted favorably because they have high specific strength and high specific stiffness. In addition, in order to provide fiber-reinforced composite materials with enhanced economical features, the use of glass fibers has been favored, and the combined use of carbon fibers and glass fibers is particularly preferable from the viewpoint of the balance between mechanical properties and economical features. Furthermore, from the viewpoint of providing fiber-reinforced composite materials with enhanced impact resistance and shapability, the use of aramid fibers has been favored, and the combined use of carbon fibers and aramid fibers is particularly favored from the viewpoint of the balance between mechanical properties and impact resistance. In addition, from the viewpoint of providing fiber-reinforced composite materials with enhanced conductivity, reinforcing fibers coated with metal such as nickel, copper, or ytterbium may be used. Among these, PAN based carbon fibers, which have good mechanical properties such as high strength and elastic modulus can be used more favorably.

A good method for prepreg production is impregnating a reinforcing fiber base material with the epoxy resin composition according to the present invention. A good impregnation technique, for example, is the hot melt process (dry process). In performing this process, the weight content of the fiber in a prepreg can be controlled by changing the amount of resin applied to the release paper.

To perform molding of prepreg layers, appropriate techniques may be selected from the press forming method, autoclave molding method, bag molding method, wrapping tape method, internal pressure molding method, and the like.

The reinforcing fiber contained in the prepreg according to the present invention may be in the form of woven fabric. If woven fabric is adopted, preferable weave types include plain weave, twill weave, and satin weave. The use of plain weave, twill weave, or satin weave serves to produce sheet-like prepreg layers that are high in handleability and high in shape steering ability during lay-up, thereby facilitating the molding of members having complex shapes. Here, the expression "being high in shape steering ability" refers to the ability of reinforcing fiber woven fabric sheets or the like being laid-up in a mold of a three dimensional shape to conform to the shape of the mold without suffering from disorder of fiber orientation, thereby forming a molding with satisfactory quality and performance. The process of lay-up them in a mold of a three dimensional shape includes a step for forming a preform using reinforcing fiber woven fabric or the like, and this step requires trimming operations such as cutting off those portions which do not conform to the mold shape with scissors or cutters and taping those portions which will not be included in the final product. Such trimming operations consume significant time and labor and cause material loss.

The reinforcing fibers contained in the prepreg according to the present invention may be in the form of discontinuous fibers. If reinforcing fibers of a discontinuous form are adopted, it ensures a high shapability into a complex shape when sheet-like prepreg layers are molded by applying an external force.

When the reinforcing fibers to use are in the form of discontinuous fibers, it is preferable that they are in the form of bundles that are dispersed at random in the prepreg layers. If such fibers are adopted, it serves to facilitate the shaping of the prepreg layers into a complex form when they are molded by applying an external force.

Furthermore, when reinforcing fibers in the form of discontinuous fibers are used, it is also preferable that they are in the form of substantially monofilaments that are dispersed at random in the prepreg layers. When the reinforcing fibers are in the form of discontinuous fibers, random dispersion of discontinuous reinforcing fibers that are in the form of substantially monofilaments serves to decrease the number of reinforcing fibers in the form of fiber bundles remaining in the prepreg layers and accordingly, the weak portions present around the ends of bundles of reinforcing fibers are minimized to ensure a high reinforcing efficiency and isotropy. Here, the expression "in the form of substantially monofilaments" means that they are in the form of low-fineness strands each containing less than 500 reinforcing single-fibers. It is more preferable that the reinforcing fibers be in the form of dispersed monofilaments, i.e., dispersed single-fibers, and still more preferable that the monofilament-like single-fibers be dispersed at random. In the case where the reinforcing fibers are in the form of discontinuous fibers, the reinforcing fibers may be in the form of nonwoven fabric.

Next, the fiber-reinforced composite material according to the present invention will be described below.

The fiber-reinforced composite material according to one aspect of the present invention is a fiber-reinforced composite material that includes a cured product of the epoxy resin composition according to the present invention (hereinafter referred to as "cured epoxy resin of the present invention") as the matrix resin, and is typically produced by curing the prepreg according to the present invention described above. More specifically, a fiber-reinforced composite material containing a cured product of the epoxy resin composition according to the present invention as the matrix resin can be produced by lay-up, as required, prepreg layers containing the epoxy resin composition according to the present invention as the matrix resin, followed by heating to cure it.

For the present invention, the term "depolymerization" refers to any step in which a polymerized substance is decomposed under external stimuli or the like and ultimately returned to monomers. In the initial stage of depolymerization of a cured epoxy resin, only the surface may be swollen or only the surface may be in a slightly dissolved state. When in such states, the cured epoxy resin, which may be joined to dissimilar materials such as metals, will be separated or removed easily so that they become recyclable. As depolymerization progresses, the material is plasticized over the entire thickness to form a rubber region. When in such a state, the cured epoxy resin in some cases can be handled as a thermoplastic resin and can be recycled by remolding etc. In the final stage of depolymerization, the cured epoxy resin is significantly dissolved and loses its original shape. Even when it appears to retain its original shape after being depolymerized in a static state, it is regarded as having lost its original shape if it collapses and loses the shape when an attempt is made to move it. If a fiber-reinforced composite material is rendered in such a state, the reinforcing fibers contained therein can be recovered as recycled fibers (resources).

To allow a cured product of the epoxy resin composition contained in the fiber-reinforced composite material according to the present invention to be depolymerized and plasticized by adding a dissolution liquid or performing hydrolysis treatment, useful methods include the thermal decomposition method, supercritical water method, subcritical water method, superheated steam method, liquid-phase decomposition method, dissolution method, and glycol method. The adoption of the dissolution method, which uses a dissolution liquid, is preferable because it serves for easy cleavage of disulfide bond to enable resin depolymerization, while the adoption of the superheated steam method is preferable because of the unnecessity of treatment for neutralizing the dissolution liquid or treatment for cleaning the recovered fibers. There are no specific limitations on the dissolution liquid to use for the present invention as long as it can dissolve the cured epoxy resin of the present invention, but for example, it may contain at least one liquid selected from acidic solutions, organic solvents, hydrogen peroxide solution, and ionic liquids. These liquids can work to dissolve or plasticize the cured epoxy resin of the present invention and serve for efficient depolymerization. Such dissolution liquids may be used singly or in combination of two or more thereof.

Examples of acidic solutions that are useful as dissolution liquids for epoxy resin compositions include solutions of phosphoric acid, sulfuric acid, hydrochloric acid, and nitric acid. Such acidic components may be used singly or in combination of two or more thereof.

Examples of organic solutions that are useful as dissolution liquids as described above include aliphatic hydrocarbon based solvents, aromatic hydrocarbon based solvents, alcohol based solvents, ketone based solvents, ether based solvents, amide based solvents, ester based solvents, and N-methyl-2-pyrrolidone which has a lactam structure. Among these, the use of N-methyl-2-pyrrolidone is preferable because it is high in water solubility and serves for cleaning treatment of recovered fibers with water. These organic liquids may be used singly or in combination of two or more thereof. Examples of the aliphatic hydrocarbon based solvents include pentane, hexane, heptane, octane, and glycols. Examples of the aromatic hydrocarbon based solvents include benzene, toluene, xylene, and tetralin. Examples of the alcohol based solvents include benzyl alcohol. Examples of the ketone based solvents include acetone, methyl ethyl ketone, methyl isobutyl ketone, diisobutyl ketone, cyclohexanone, and diacetone alcohol. In particular, the use of acetone and methyl ethyl ketone is preferable because they are high in volatility and serve to facilitate the drying of the recovered fibers. The organic solvents may include decomposition catalysts. Examples of such decomposition catalysts include iron oxide and alkali metal compounds

Examples of ionic liquids useful as the aforementioned dissolution liquids include those ionic liquids which contain at least one cation selected from the group consisting of imidazolium based, pyridinium based, pyrrolidinium based, quaternary ammonium based, and quaternary phosphonium based ones. Such ionic liquids may be used singly or in combination of two or more thereof.

The fiber-reinforced composite material according to the present invention is preferable because it can form a cascade-recyclable composite material through the following steps (i) to (iii).

(i) The reinforcing fibers in the fiber-reinforced composite material are cut to fiber lengths of 2 to 100 mm.
(ii) The cured product of the epoxy resin composition is depolymerized and plasticized by adding a dissolution liquid or performing hydrolysis treatment.
(iii) The plasticized fiber-reinforced composite material is dispersed at random and hot-pressed under the conditions of 100°C to 200°C and 0.7 to 15 MPa.

The implementation of the steps (i) to (iii) is preferable because it serves to provide a cascade-recyclable composite material and accordingly, this enables the recycling of the fiber-reinforced composite material without highly depolymerizing it to such an extent that the cured product of the epoxy resin composition, which is present as the matrix resin, is separated from the reinforcing fibers, which will lead to a large reduction of greenhouse effect gas emissions generated from the recycling of the fiber-reinforced composite material. Thus, the cascade-recyclable composite material that is produced based on the present invention is favored because it is low in environmental impact during its production process.

The step (i) in which the reinforcing fibers in the fiber-reinforced composite material according to the present invention are cut to fiber lengths of 2 to 100 mm can be carried out by employing a device such as hammer mill type pulverizers, sand grind mill type wet pulverizers, pelletizers, high speed rotor type pulverizers, rotary shear type pulverizers, and ball mill type pulverizers. Here, if all the fibers originally have lengths in the range of 2 to 100 mm, they may be used as is.

The fiber lengths of the reinforcing fibers in a cascade-recyclable composite material is preferably 3 to 20 mm and therefore, the adjustment of their fiber length to the range of 3 to 20 mm serves to produce a composite material having an increased fiber dispersibility to ensure high stiffness. Alternatively, it is also preferable for the fiber length to be 60 to 100 mm. The adjustment of the fiber length to the range of 60 to 100 mm is preferable because it serves to simplify the processing step, thereby reducing the emissions of greenhouse effect gases. Thus, if the composite material, after use, is recycled through a processing step designed to shorten the fiber length to 50 mm or less, it serves for achieving a large decrease in the emission of greenhouse effect gases.

The aforementioned fiber-reinforced composite material, which is according to an aspect of the present invention, can be used favorably for sport applications, general industrial applications, and aerospace applications. More specifically, it can be used suitably for sporting goods such as golf shafts, fishing rods, tennis and badminton rackets, hockey and other sticks, and skiing poles. Furthermore, examples of suitable general industrial applications include structural materials of automobiles, bicycles, windmills, ships, railroad vehicles, and the like, and examples of electronic instruments include IC trays and cases (housings) of information processing devices such as notebook computers. In addition, suitable applications in the aerospace industry include primary structure members of aircraft such as main wings, tail wings, and floor beams, and secondary structure members such as interior materials.

## EXAMPLES

The present invention is described in more detail below with reference to examples, but the invention should not be construed as being limited to the descriptions of the examples.

### 1. Materials used

<Epoxy resin>

The epoxy resins used in the examples and the comparative examples are listed below. It should be noted that the epoxy equivalent weight is abbreviated as EEW In Tables 1 to 4.

[Component [A]]

- jER (registered trademark) 825 (bisphenol A type epoxy resin, average epoxy equivalent weight 175, viscosity at 23°C: 7,000 mPa·s, manufactured by Mitsubishi Chemical Corporation)
- EPALLOY (registered trademark) 5000 (hydrogenated bisphenol A type epoxy resin, viscosity at 23°C: 2,000 mPa·s, average epoxy equivalent weight 220, manufactured by Huntsman Corporation)

[Component [B]]

- jER (registered trademark) 1001 (bisphenol A type epoxy resin, a compound having a structure of formula (I), average epoxy equivalent weight 475, solid at 23°C, manufactured by Mitsubishi Chemical Corporation)
- jER (registered trademark) 1004 (bisphenol A type epoxy resin, a compound having a structure of formula (I), average epoxy equivalent weight 925, solid at 23°C, manufactured by Mitsubishi Chemical Corporation)
- jER (registered trademark) 4004P (bisphenol F type epoxy resin, a compound having a structure of formula (I),

average epoxy equivalent weight 908, solid at 23°C, manufactured by Mitsubishi Chemical Corporation)

- jER (registered trademark) 4005P (bisphenol F type epoxy resin, a compound having a structure of formula (I), average epoxy equivalent weight 1,075, solid at 23°C, manufactured by Mitsubishi Chemical Corporation)
- FLEP (registered trademark) 60 (epoxy resin, a compound having a structure of formula (II), average epoxy equivalent weight 279, semi-solid at 23°C, manufactured by Toray Fine Chemicals Co., Ltd.)
- FLEP (registered trademark) 50 (epoxy resin, a compound having a structure of formula (II), average epoxy equivalent weight 327, semi-solid at 23°C, manufactured by Toray Fine Chemicals Co., Ltd.)

[Component [D]]

- Sumiepoxy (registered trademark) ELM434 (N,N,N',N'-tetraglycidyl diaminodiphenylmethane, average epoxy equivalent weight 120, manufactured by Sumitomo Chemical Co., Ltd.)

[Component [E]]

- EPICLON (registered trademark) HP-4032D (naphthalene type epoxy resin, average epoxy equivalent weight 142, viscosity at 23°C: 39,000 mPa·s, manufactured by DIC Corporation)
- EPICLON (registered trademark) HP-4770 (difunctional naphthalene type epoxy resin, solid at 23°C, average epoxy equivalent weight 204, manufactured by DIC Corporation)

[Epoxy resin other than components [A], [B], [D], and [E]]

- jER (registered trademark) 1007 (bisphenol A type epoxy resin, a compound having a structure of formula (I), but having an average epoxy equivalent weight of 1,975, manufactured by Mitsubishi Chemical Corporation)
- jER (registered trademark) 4007P (bisphenol F type epoxy resin, a compound having a structure of formula (I), but having an average epoxy equivalent weight of 2,250, manufactured by Mitsubishi Chemical Corporation)
- FLEP (registered trademark) 125X (epoxy resin having disulfide bond and a structure of formula (II), but having an average epoxy equivalent weight of 850, manufactured by Toray Fine Chemicals Co., Ltd.)

It should be noted that "epoxy resin other than the components [A], [B], [D], and [E]" is referred to simply as "other epoxy" in Table 4.

<Curing agent>

[Component [C]]

- 4,4'-diaminodiphenyl disulfide (aromatic diamine, a compound having a structure of formula (III), but not having a structure of formula (IV), manufactured by Tokyo Chemical Industry Co., Ltd.)
- 2,2'-diaminodiphenyl disulfide (aromatic diamine, a compound having a structure of formula (IV), manufactured by Tokyo Chemical Industry Co., Ltd.)

[Aromatic diamine other than component [C]]

- 4,4'-diaminodiphenyl sulfone (manufactured by Tokyo Chemical Industry Co., Ltd.)

It should be noted that "aromatic diamine other than component [C]" is referred to simply as "other aromatic diamine" in Tables 1, 2, and 4.

2. Sample preparation method

[Method for preparation of epoxy resin composition]

Predetermined amounts of the component [A], component [B], component [D], and component [E], as epoxy resin components, were put in a stainless steel beaker, heated to 40°C to 150°C, and kneaded appropriately until all components formed a homogeneous mixture.

The mixture of epoxy resin components prepared as described above was cooled to 60°C or less, and the component [C] and other aromatic diamines were added, followed by kneading the mixture at 60°C for 30 minutes to provide an epoxy resin composition.

[Method for production of cured resin]

An epoxy resin composition prepared according to the [Method for preparation of epoxy resin composition] described above was deaerated in a vacuum and injected in a mold that was adjusted to a thickness of 1 mm by means of a Teflon (trademark) spacer. Next, it was heated in a hot air oven by raising the temperature from 30°C to 180°C at a heating rate of 1.0°C per minute, followed by maintaining it at 180°C for 120 minutes to ensure the curing of the epoxy resin composition. Then, it was cooled to 30°C and demolded out of the mold to provide a cured resin with a thickness of 1 mm.

[Method for production of fiber-reinforced composite material]

An epoxy resin composition prepared according to the [Method for preparation of epoxy resin composition] described above was used to impregnate a sheet of carbon fibers (TORAYCA (registered trademark) T700S-12K-60E, manufactured by Toray Industries, Inc., fiber areal weight 150 $g/m^2$) arranged in one direction, thereby producing a prepreg. The resulting prepreg was cut into sheets with a length of 200 mm and a width of 200 mm, and five of the sheets were stacked in such a manner that their fiber directions intersected at right angles, and the stack was placed in a mold, pressed in a press machine heated at 150°C to 200°C under a pressure of 3.5 MPa, and cured by heating for 90 minutes. The mold was then removed from the press machine and cooled to 30°C on a metal plate to provide a fiber-reinforced composite material.

Here, Vf (in %) denotes the volume fraction of the reinforcing fibers in the fiber-reinforced composite material and specifically, it is calculated by the formula given below.

$$Vf = (W \times 100) / (\rho \times T)$$

W: mass of reinforcing fibers per $cm^2$ ($g/cm^2$) in reinforcing fiber base material
$\rho$: density of reinforcing fibers ($g/cm^3$)
T: thickness of fiber-reinforced composite material (cm)

3. Evaluation methods

[Method for measurement of glass transition temperature]

From a 1 mm thick cured resin produced according to the [Method for production of cured resin] described above, a 5 mg sample was weighed off on a sample pan and subjected to measurement according to JIS K 7121 (1999) using a differential scanning calorimeter (Q-2500, manufactured by TA Instruments).

The sample was heated from 25°C to 300°C at a temperature ramp rate of 10°C/min, maintained at 300°C for 3 minutes, and then rapidly cooled to 25°C at a cooling rate of 30°C/min. In the chart (longitudinal axis representing heat energy and horizontal axis representing temperature) showing the heating step from 25°C to 300°C observed by differential scanning calorimetry, the steplike changing portion of the resulting glass transition curve was examined and the glass transition temperature was determined as the temperature at the point where the straight line that was located at the same distance in the vertical direction from the extension of each baseline intersected the curve that ran in a steplike way in the course of glass transition. This measuring run was repeated three times and the average of the measurements was adopted as the glass transition temperature.

[Method for evaluation of depolymerizability of epoxy resin composition]

A 1 mm thick cured resin was produced according to the [Method for production of cured resin] described above.

Three square test specimens having a width of 15 mm and a length of 15 mm were prepared from such a cured resin and left stationarily in stainless steel beakers each containing 65 g of benzyl alcohol, methyl ethyl ketone (MEK), or N-methyl-2-pyrrolidone (NMP) as dissolution liquid, followed by making evaluations according to the criteria given below. In doing this, each stainless steel beaker was stored with a lid on at 23°C.

The cured epoxy resin shows no changes ... N
Only the surface is swollen or slightly dissolved ... A
The cured epoxy resin has been plasticized to form a rubber region over entire thickness ... B
The cured epoxy resin has dissolved significantly and lost its original shape ... C

(Example 1)

An epoxy resin composition was prepared according to the [Method for preparation of epoxy resin composition] described above using 70 parts by mass of jER (registered trademark) 825, that is, an epoxy resin falling under the component [A], 30 parts by mass of jER (registered trademark) 1001, that is, an epoxy resin falling under the component [B] that have an average epoxy equivalent weight of 400 to 1,200 and a structure of formula (I), and 26.5 parts by mass of 4,4'-diaminodiphenyl disulfide, that is, a curing agent falling under the component [C].

Using this epoxy resin composition, a cured epoxy resin was produced according to the [Method for production of cured resin] and subjected to measurement performed according to the [Method for measurement of glass transition temperature]. Results showed that it had a glass transition temperature of 136°C and had high heat resistance.

Based on evaluations made according to the [Method for evaluation of depolymerizability of epoxy resin composition], the sample immersed in MEK and examined on the 30th day was rated as A in terms of depolymerizability. Only the surface suffered from slight dissolution, indicating high depolymerizability.

(Examples 2 and 21)

Except for using the resin components that are shown in Table 1, the same procedure as in Example 1 was carried out to prepare epoxy resin compositions and cured epoxy resins. Evaluation results are shown in Table 1, Table 2, and Table 3.

[Table 1]

[Table 1]

| component | | (I)/(II) | EEW | Example 1 | Example 2 | Example 3 | Example 4 | Example 5 | Example 6 | Example 7 | Example 8 |
|---|---|---|---|---|---|---|---|---|---|---|---|
| component [A] | jER® 825 | | 175 | 70 | | 70 | 70 | 70 | 70 | 70 | 70 |
| | EPALLOY® 5000 | | 220 | | 70 | | | | | | |
| component [B] | jER® 1001 | (I) | 475 | 30 | 30 | | | | 30 | 30 | 30 |
| | jER® 1004 | (I) | 925 | | | 30 | | | | | |
| | jER® 4004P | (I) | 908 | | | | 30 | | | | |
| | jER® 4005P | (I) | 1075 | | | | | 30 | | | |
| component [C] | 4,4'-diaminodiphenyl disulfide | | - | 26.5 | 23.5 | 25 | 25 | 25 | | 13.3 | |
| | 2,2'-diaminodiphenyl disulfide | | - | | | | | | 26.5 | 13.3 | 13.3 |
| other aromatic diamine | 4,4'-diaminodiphenyl sulfone | | - | | | | | | | | 13.3 |
| Tg | [°C] | | | 136 | 131 | 112 | 124 | 115 | 114 | 130 | 139 |
| depolymerization test 23°C/7th day | benzyl alcohol | | | N | N | N | N | N | N | N | N |
| | MEK | | | N | N | N | N | N | A | N | N |
| | NMP | | | N | N | N | N | N | C | A | A |
| 23°C/14th day | benzyl alcohol | | | N | N | N | N | N | N | N | N |
| | MEK | | | N | N | A | A | A | A | A | A |
| | NMP | | | N | N | N | N | N | C | B | A |
| 23°C/30th day | benzyl alcohol | | | N | N | N | N | N | N | N | N |
| | MEK | | | A | A | A | A | A | A | A | A |
| | NMP | | | N | N | N | N | N | C | C | B |

[Table 2]

[Table 2]

| component | | (I)/(II) | EEW | Example 9 | Example 10 | Example 11 | Example 12 | Example 13 | Example 14 | Example 15 |
|---|---|---|---|---|---|---|---|---|---|---|
| component [A] | jER® 825 | | 175 | 75 | 75 | 85 | 65 | 50 | 40 | 55 |
| | EPALLOY® 5000 | | 220 | | | | | | | |
| component [B] | jER® 1001 | (I) | 475 | | | | 30 | 30 | 30 | |
| | FLEP® 60 | (11) | 279 | 25 | | | | | | |
| | FLEP® 50 | (II) | 327 | | 25 | 15 | | | | 25 |
| component [D] | SUMIEPOXY® ELM434 | | 120 | | | | 5 | 20 | 30 | 20 |
| component [C] | 4,4'-diaminodiphenyl disulfide | | - | 30.5 | 29 | | | | 32 | |
| | 2,2'-diaminodiphenyl disulfide | | - | | | 31 | 28 | 30.5 | | 19.8 |
| other aromatic diamine | 4,4'-diaminodiphenyl sulfone | | - | | | | | | | 13.2 |
| Tg | [°C] | | | 118 | 111 | 115 | 119 | 143 | 175 | 154 |
| depolymerization test 23°C/7th day | benzyl alcohol | | | B | B | A | N | N | N | N |
| | MEK | | | N | N | A | A | A | N | N |
| | NMP | | | N | N | A | B | A | N | N |
| 23°C/14th day | benzyl alcohol | | | C | C | B | N | N | N | N |
| | MEK | | | N | A | A | A | A | N | N |
| | NMP | | | A | A | A | B | A | N | A |
| 23°C/30th day | benzyl alcohol | | | C | C | B | N | N | N | N |
| | MEK | | | A | A | A | A | A | A | N |
| | NMP | | | A | A | B | C | B | N | B |

[Table 3]

[Table 3]

| component | | (I)/(II) | EEW | Example 16 | Example 17 | Example 18 | Example 19 | Example 20 | Example 21 |
|---|---|---|---|---|---|---|---|---|---|
| component [A] | jER® 825 | | 175 | 20 | 20 | 20 | 15 | 15 | 25 |
| component [B] | jER® 1001 | (I) | 475 | 30 | | | 15 | | 15 |
| | FLEP® 60 | (II) | 279 | | 30 | 20 | | 10 | |
| | FLEP® 50 | (II) | 327 | | | | | | |
| component [E] | EPICLON® HP-4032D | | 142 | 50 | 50 | 60 | | | |
| | EPICLON® HP-4770 | | 204 | | | | 70 | 75 | 60 |
| component [C] | 4,4'-diaminodiphenyl disulfide | | - | | | 10.1 | | | 10.4 |
| | 2,2'-diaminodiphenyl disulfide | | - | 33 | 35.5 | 23.5 | 25 | 30 | 18.2 |
| Tg | [°C] | | | 138 | 131 | 150 | 150 | 145 | 157 |
| depolymerization test 23°C/7th day | benzyl alcohol | | | N | N | N | N | N | N |
| | MEK | | | N | N | N | N | N | N |
| | NMP | | | N | N | N | A | A | N |
| 23°C/14th day | benzyl alcohol | | | N | N | N | N | N | N |
| | MEK | | | N | N | N | N | N | N |
| | NMP | | | N | A | N | C | C | A |
| 23°C/30th day | benzyl alcohol | | | N | N | N | N | N | N |
| | MEK | | | N | N | N | A | A | N |
| | NMP | | | A | B | A | C | C | B |

(Example 22)

The epoxy resin composition prepared in Example 1 was used to impregnate a sheet of carbon fibers (TORAYCA (registered trademark) T700S-12K-60E) arranged in one direction, thereby producing a prepreg with a fiber areal weight of 190 g/$m^2$. The resulting prepreg had favored tackiness and high handleability. The fiber-reinforced composite material produced according to the [Method for production of fiber-reinforced composite material] had a volume content of the reinforcing fiber, Vf, of 65% and had high quality.

(Example 23)

The epoxy resin composition prepared in Example 2 was used to impregnate a sheet of carbon fibers (TORAYCA (registered trademark) T700S-12K-60E) arranged in one direction, thereby producing a prepreg with a fiber areal weight of 190 g/$m^2$. The resulting prepreg was too high in tackiness due to the low viscosity of the resin composition and accordingly it was low in handleability. The fiber-reinforced composite material produced according to the [Method for production of fiber-reinforced composite material] had a volume content of the reinforcing fiber, Vf, of 64% and had high quality.

(Example 24)

The prepreg prepared in Example 22 was shaped in a mold designed for automobile roof, but it was found to be low in shape steering ability and implementation of complicated trimming operations was required.

(Example 25)

The epoxy resin composition prepared in Example 1 was used to impregnate a plain weave fabric base with a fiber areal weight of 192 $g/m^2$ formed of carbon fibers (TORAYCA (registered trademark) T700S-12K-60E), thereby producing a fabric prepreg. When the resulting fabric prepreg was shaped in a mold designed for automobile roof, it was found to be high in shape steering ability and did not require trimming operations.

(Example 26)

Carbon fibers of TORAYCA (registered trademark) T700S-12K-60E were cut to 12 mm and dispersed at random in the form of bundles or in the form of substantially monofilaments to produce nonwoven fabrics with a fiber areal weight of 150 $g/m^2$. Then, nonwoven fabric prepregs were produced by impregnating the resulting nonwoven fabrics with the epoxy resin composition prepared in Example 1. When the resulting fabric prepregs were shaped in a mold designed for automobile roof, they were found to be high in shape steering ability and did not require trimming operations.

(Example 27)

The fiber-reinforced composite material prepared in Example 22 was pulverized in a biaxial crusher, resulting in chips containing reinforcing fibers having fiber lengths of 5 to 100 mm. When the chips obtained were treated with superheated steam at 300°C for 30 minutes, they were plasticized as the cured epoxy resin in the fiber-reinforced composite material was depolymerized. When the plasticized chips were dispersed at random and hot-pressed under conditions of 180°C and 10 MPa, a remolded plate was obtained.

(Comparative example 1)

Except that 100 parts by mass of jER (registered trademark) 825, that is, an epoxy resin falling under the component [A], was adopted as the only epoxy resin component, the same procedure as in Example 1 was carried out to prepare an epoxy resin composition and produce a cured epoxy resin. The resin components used and evaluation results obtained are shown in Table 4. It was found that the resulting resin composition was high in heat resistance, but insufficient in depolymerizability.

(Comparative example 2)

Except for using 95 parts by mass of jER (registered trademark) 825, that is, an epoxy resin falling under the component [A], and 5 parts by mass of jER (registered trademark) 1001, that is, an epoxy resin falling under the component [B] that had an average epoxy equivalent weight of 400 to 1,200 and a structure of the formula (I), the same procedure as in Example 1 was carried out to prepare an epoxy resin composition and produce a cured epoxy resin. The resin components used and evaluation results obtained are shown in Table 4. It was found that the resulting resin composition was high in heat resistance, but insufficient in depolymerizability.

(Comparative example 3)

Except for using 60 parts by mass of jER (registered trademark) 825, that is, an epoxy resin falling under the component [A], and 40 parts by mass of jER (registered trademark) 1001, that is, an epoxy resin falling under the component [B] that had an average epoxy equivalent weight of 400 to 1,200 and a structure of the formula (I), the same procedure as in Example 1 was carried out to prepare an epoxy resin composition and produce a cured epoxy resin. The resin components used and evaluation results obtained are shown in Table 4. It was found that the resulting resin composition was high in depolymerizability, but insufficient in heat resistance.

(Comparative example 4)

Except for using 90 parts by mass of jER (registered trademark) 825, that is, an epoxy resin falling under the component [A], and 10 parts by mass of jER (registered trademark) 1007, that is, a component that had a structure of the

formula (I), but had an average epoxy equivalent weight of 1,975 and fell under none of the components [A], [B], [D], and [E], the same procedure as in Example 1 was carried out to prepare an epoxy resin composition and produce a cured epoxy resin. The resin components used and evaluation results obtained are shown in Table 4. It was found that the resulting resin composition was high in depolymerizability, but insufficient in heat resistance.

(Comparative example 5)

Except for using 90 parts by mass of jER (registered trademark) 825, that is, an epoxy resin falling under the component [A], and 10 parts by mass of jER (registered trademark) 4007P, that is, a component that had a structure of the formula (I), but had an average epoxy equivalent weight of 2,250 and fell under none of the components [A], [B], [D], and [E], the same procedure as in Example 1 was carried out to prepare an epoxy resin composition and produce a cured epoxy resin. The resin components used and evaluation results obtained are shown in Table 4. It was found that the resulting resin composition was high in depolymerizability, but insufficient in heat resistance.

(Comparative example 6)

Except for using 95 parts by mass of jER (registered trademark) 825, that is, an epoxy resin falling under the component [A], and 5 parts by mass of FLEP (registered trademark) 50, that is, an epoxy resin falling under the component [B] that had an average epoxy equivalent weight of 150 to 500 and a structure of the formula (II), the same procedure as in Example 1 was carried out to prepare an epoxy resin composition and produce a cured epoxy resin. The resin components used and evaluation results obtained are shown in Table 4. It was found that the resulting resin composition was high in heat resistance, but insufficient in depolymerizability.

(Comparative example 7)

Except for using 60 parts by mass of jER (registered trademark) 825, that is, an epoxy resin falling under the component [A], and 40 parts by mass of FLEP (registered trademark) 50, that is, an epoxy resin falling under the component [B] that had an average epoxy equivalent weight of 150 to 500 and a structure of the formula (II), the same procedure as in Example 1 was carried out to prepare an epoxy resin composition and produce a cured epoxy resin. The resin components used and evaluation results obtained are shown in Table 4. It was found that the resulting resin composition was high in depolymerizability, but insufficient in heat resistance.

(Comparative example 8)

Except for using 90 parts by mass of jER (registered trademark) 825, that is, an epoxy resin falling under the component [A], and 10 parts by mass of FLEP (registered trademark) 125X, that is, a component that had a structure of the formula (II), but had an average epoxy equivalent weight of 850 and fell under none of the components [A], [B], [D], and [E], the same procedure as in Example 1 was carried out to prepare an epoxy resin composition and produce a cured epoxy resin. The resin components used and evaluation results obtained are shown in Table 4. It was found that the resulting resin composition was high in depolymerizability, but insufficient in heat resistance.

(Comparative example 9)

Except for using 70 parts by mass of jER (registered trademark) 825, that is, an epoxy resin falling under the component [A], and 30 parts by mass of jER (registered trademark) 1001, that is, an epoxy resin falling under the component [B] that had an average epoxy equivalent weight of 400 to 1,200 and a structure of the formula (I), and adding, instead of the component [C], an aromatic diamine other than the component [C] to serve as a curing agent, the same procedure as in Example 1 was carried out to prepare an epoxy resin composition and produce a cured epoxy resin. The resin components used and evaluation results obtained are shown in Table 4. It was found that the resulting resin composition was high in heat resistance, but insufficient in depolymerizability.

[Table 4]

[Table 4]

| component | | (I)/(II) | EEW | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|---|---|
| component [A] | jER® 825 | | 175 | 100 | 95 | 60 | 90 | 90 | 95 | 60 | 90 | 70 |
| component [B] | jER® 1001 | (I) | 475 | | 5 | 40 | | | | | | 30 |
| other epoxy | jER® 1007 | (I) | 1975 | | | | 10 | | | | | |
| | jER® 4007P | (I) | 2250 | | | | | 10 | | | | |
| component [B] | FLEP® 50 | (II) | 327 | | | | | | 5 | 40 | | |
| other epoxy | FLEP® 125X | (II) | 850 | | | | | | | | 10 | |
| component [C] | 4,4'-diaminodiphenyl disulfide | | - | 33 | 31.5 | 25 | 30 | 30 | 32 | 27.5 | 30.5 | |
| other aromatic diamine | 4,4'-diaminodiphenyl sulfone | | - | | | | | | | | | 26.5 |
| Tg | [°C] | | | 153 | 151 | 108 | 101 | 96 | 122 | 81 | 107 | 148 |
| depolymerization test 23°C/7th day | benzyl alcohol | | | N | N | N | N | N | N | B | B | N |
| | MEK | | | N | N | N | N | N | N | N | N | N |
| | NMP | | | N | N | N | N | N | N | N | N | N |
| 23°C/14th day | benzyl alcohol | | | N | N | N | N | N | N | C | C | N |
| | MEK | | | N | N | N | N | N | N | A | N | N |
| | NMP | | | N | N | N | N | N | N | A | N | N |
| 23°C/30th day | benzyl alcohol | | | N | N | N | N | N | N | C | C | N |
| | MEK | | | N | N | A | A | A | N | A | A | N |
| | NMP | | | N | N | N | N | N | N | B | A | N |

Here, the figure given for each component in Tables is its amount in parts by mass relative to the total amount of all epoxy resin components, which accounts for 100 parts by mass, in the epoxy resin composition.

## Claims

**1.** An epoxy resin composition comprising components [A], [B], and [C] as specified below wherein the epoxy resin of the component [B] accounts for 10 to 30 parts by mass relative to the total amount of all epoxy resin components, which accounts for 100 parts by mass:

[A]: a difunctional epoxy resin that is liquid at 23°C,
[B]: an epoxy resin either having an average epoxy equivalent weight of 400 to 1,200 and a structure as represented by the formula (I) or having an average epoxy equivalent weight of 150 to 500 and a structure as represented by the formula (II),

[chemical compound 1]

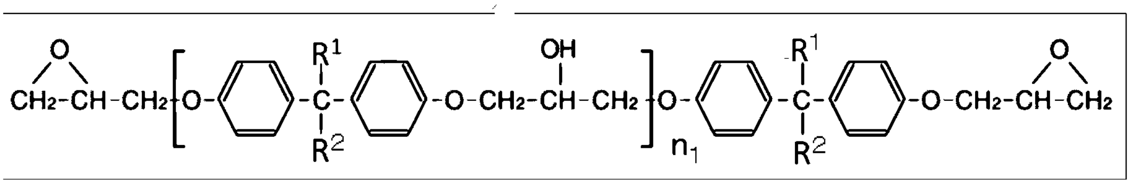

··· (I)

wherein, in the formula (I), $R^1$ and $R^2$ each represent a hydrogen atom or an alkyl group having a carbon number of 1 to 10; $R^1$ and $R^2$ may be either identical to or different from each other; and $n_1$ is an integer of 1 to 30,

[chemical compound 2]

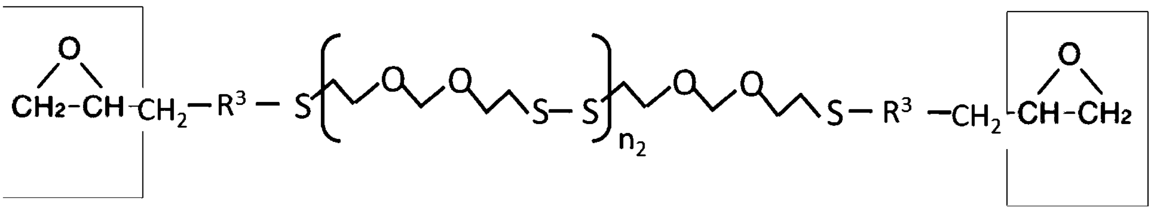

··· (II)

wherein, in the formula (II), $R^3$ represents a bisphenol structure, and $n_2$ is an integer of 1 to 30,
[C]: an aromatic diamine having a structure as represented by the formula (III),

[chemical compound 3]

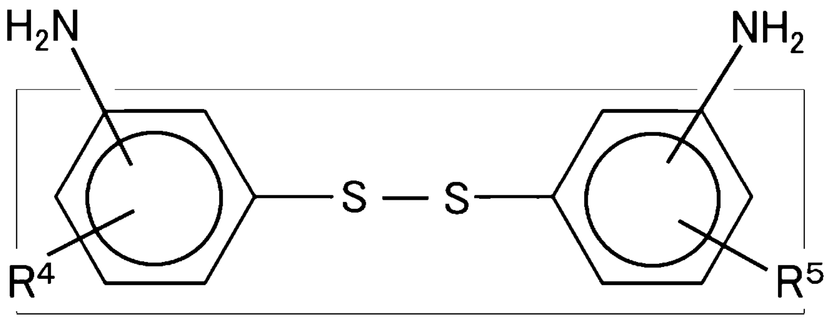

··· (III)

wherein, in the formula (III), $R^4$ and $R^5$ each represent a hydrogen atom, a halogen atom, or an alkyl group having a carbon number of 1 to 8, and $R^4$ and $R^5$ may be either identical to or different from each other.

2. An epoxy resin composition as set forth in claim 1, wherein the component [A] is a bisphenol type epoxy resin having an average epoxy equivalent weight of 160 to 200.

3. An epoxy resin composition as set forth in claim 1, wherein the component [B] has a structure as represented by the formula (I), is a bisphenol F type epoxy resin, and has an average epoxy equivalent weight of 800 to 1,200.

4. An epoxy resin composition as set forth in claim 1, wherein the component [C] is an aromatic diamine having a structure as represented by the formula (IV), or an aromatic diamine having a structure as represented by the formula (IV) and a structural isomer thereof,

[chemical compound 4]

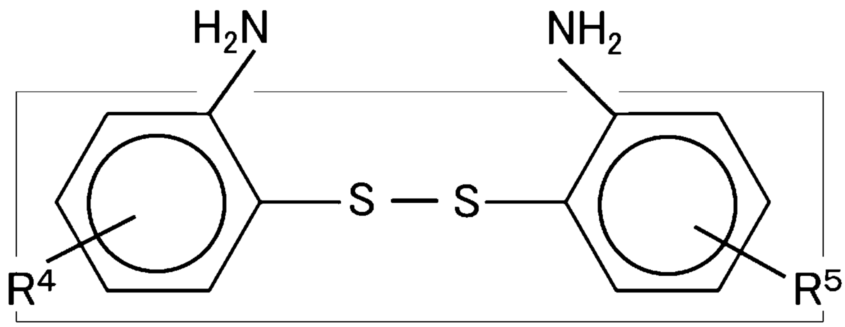

··· (IV)

wherein, in the formula (IV), $R^4$ and $R^5$ each represent a hydrogen atom, a halogen atom, or an alkyl group having a carbon number of 1 to 8, and $R^4$ and $R^5$ may be either identical to or different from each other.

5. An epoxy resin composition as set forth in claim 1, that forms a cured product with a glass transition temperature of 110°C or more when cured at 150°C to 220°C for 120 minutes.

6. An epoxy resin composition as set forth in claim 1, further comprising, as a component [D], a trifunctional or tetrafunctional epoxy resin in an amount of 5 to 30 parts by mass relative to the total amount of all epoxy resin components, which accounts for 100 parts by mass.

7. An epoxy resin composition as set forth in claim 1, further comprising, as a component [E], a difunctional naphthalene type epoxy resin.

8. A prepreg comprising an epoxy resin composition as set forth in any one of claims 1 to 7 and at least one type of reinforcing fiber selected from the group consisting of carbon fiber, glass fiber, and aramid fiber.

9. A prepreg as set forth in claim 8, wherein the reinforcing fiber is in the form of woven fabric.

10. A prepreg as set forth in claim 8, wherein the reinforcing fiber is in the form of discontinuous fiber.

11. A prepreg as set forth in claim 8, wherein the reinforcing fiber is in the form of bundles or substantially monofilaments dispersed at random.

12. A fiber-reinforced composite material produced by curing a prepreg as set forth in claim 8.

13. A cascade-recyclable composite material produced from a fiber-reinforced composite material as set forth in claim 12 by carrying out the steps (i) to (iii):

(i) the reinforcing fibers in the fiber-reinforced composite material are cut to fiber lengths of 2 to 100 mm,
(ii) the cured product of the epoxy resin composition is depolymerized and plasticized by adding a dissolution liquid or performing hydrolysis treatment, and

(iii) the plasticized fiber-reinforced composite material is dispersed at random and hot-pressed under the conditions of 100°C to 200°C and 0.7 to 15 MPa.

**14.** A component for aerospace applications produced from a fiber-reinforced composite material as set forth in claim 12.

**15.** A component for automobile applications produced from a fiber-reinforced composite material as set forth in claim 12.

## INTERNATIONAL SEARCH REPORT

International application No. **PCT/JP2024/012229**

**A. CLASSIFICATION OF SUBJECT MATTER**

***C08G 59/50***(2006.01)i; ***C08G 59/22***(2006.01)i; ***C08G 59/30***(2006.01)i; ***C08J 5/24***(2006.01)i; ***C08K 5/17***(2006.01)i; ***C08K 7/02***(2006.01)i; ***C08L 63/00***(2006.01)i
FI: C08G59/50; C08G59/22; C08G59/30; C08L63/00; C08K7/02; C08K5/17; C08J5/24 CFC

According to International Patent Classification (IPC) or to both national classification and IPC

**B. FIELDS SEARCHED**

Minimum documentation searched (classification system followed by classification symbols)

C08G59/50; C08G59/22; C08G59/30; C08J5/24; C08K5/17; C08K7/02; C08L63/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br><br><br>Y | JP 2015-160938 A (SUMITOMO RUBBER INDUSTRIES, LTD.) 07 September 2015 (2015-09-07)<br>claims 1, 6, paragraphs [0011], [0016], [0017], [0038]-[0043], [0046], example 5, table 1 | 1-3, 5-12, 14, 15<br><br><br>4,13 |
| Y | JP 2022-168750 A (NATIONAL INSTITUTE FOR MATERIALS SCIENCE) 08 November 2022 (2022-11-08)<br>claims, paragraphs [0006], [0056], [0062], [0113], [0153]-[0158], examples, tables 1, C 16 | 1-15 |
| Y | MARTINEZ-DIAZ, David et al. Hardener Isomerism and Content of Dynamic Disulfide Bond Effect on Chemical Recycling of Epoxy Networks. Applied Polymer Materials, 2022, vol. 4, pp. 5068-5076, https://doi.org/10.1021/acsapm.2c 00598<br>abstracts 1, 2, 3, fig. 1, 2, 3 | 4, 13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br><br>Telephone No. |

Form PCT/ISA/210 (second sheet) (July 2022)

**INTERNATIONAL SEARCH REPORT**

International application No.
**PCT/JP2024/012229**

**C. DOCUMENTS CONSIDERED TO BE RELEVANT**

| Category* | Citation of document, with indication, where appropriate, of the relevant passages | Relevant to claim No. |
|---|---|---|
| Y | SASTRI. V. R. et al.. Reversible Crosslinking in Epoxy Resins. II. New Approaches. Journal of Applied Polymer Science, 1990, vol. 39, pp. 1439-1457<br>particularly, INTRODUCTION, EXPERIMENTAL, RESULTS AND DISCUSSION | 4, 13 |
| Y | JP 2014-141573 A (KYOCERA CHEMICAL CORP.) 07 August 2014 (2014-08-07)<br>claim 3, paragraphs [0023]-[0028], [0058] | 1-15 |
| Y | JP 2005-140863 A (NITTO DENKO CORPORATION) 02 June 2005 (2005-06-02)<br>claim 2, paragraphs [0013]-[0016], [0096] | 1-15 |
| Y | JP 7-70286 A (MITSUI TOATSU CHEMICALS, INC.) 14 March 1995 (1995-03-14)<br>claim 1, paragraphs [0009], [0010], [0034] | 1-15 |
| Y | WO 2012/014499 A1 (MITSUI CHEMICALS, INC.) 02 February 2012 (2012-02-02)<br>paragraph [0083] | 1-15 |

Form PCT/ISA/210 (second sheet) (July 2022)

**INTERNATIONAL SEARCH REPORT**
**Information on patent family members**

International application No.
**PCT/JP2024/012229**

| Patent document cited in search report | Publication date (day/month/year) | Patent family member(s) | Publication date (day/month/year) |
|---|---|---|---|
| JP 2015-160938 A | 07 September 2015 | (Family: none) | |
| JP 2022-168750 A | 08 November 2022 | (Family: none) | |
| JP 2014-141573 A | 07 August 2014 | (Family: none) | |
| JP 2005-140863 A | 02 June 2005 | (Family: none) | |
| JP 7-70286 A | 14 March 1995 | US 5665797 A<br>claim 1, column 3, line 53 to column 4, line 19, column 11<br>EP 632080 A1<br>SG 48269 A<br>HK 1007382 A<br>KR 10-1995-0000794 A<br>CN 1103103 A | |
| WO 2012/014499 A1 | 02 February 2012 | US 2013/0128435 A1<br>paragraph [0136]<br>CN 103038285 A<br>KR 10-2013-0031370 A<br>TW 201204782 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015181054 A